# EUROPÄISCHE PATENTANMELDUNG

(11) **EP 1 878 556 A1**
(43) Veröffentlichungstag der Anmeldung: **16.01.2008**
(21) Anmeldenummer: 07013579.3
(22) Anmeldetag: 11.07.2007
(51) Int. Cl.: B29C 45/33, B29C 33/76

(54) **Schieberdesign zur Vermeidung von Abzeichnungen**

(30) Priorität: 14.07.2006 DE 102006033063; 21.06.2007 DE 102007029068
(71) Anmelder: Plastal GmbH, 91781 Weissenburg (DE)
(72) Erfinder: Bücker, Dirk, 41199 Mönchengladbach 3 (DE); Görse, Hergen, 91154 Roth (DE); Kratzer, Johannes, 91757 Treuchtlingen (DE); Nieland, Heiko, 97688 Bad Kissingen (DE)
(74) Vertreter: Scherzberg, Andreas Hans

(57) **Zusammenfassung**

Die Erfindung betrifft ein Spritzgusswerkzeug zur Herstellung von Kunststoffteilen (3) mit Schieberelementen (2) zur Erzeugung von Hinterschnitten an den Kunststoffteilen (3), wobei die Schieberelemente (2) an ihrem Randbereich eine Übergangskontur (1) aufweisen, die an die Kontur des angrenzenden Werkzeugkorpus (5) angepasst ist.

Dadurch, dass die Übergangskontur (1) gebogene Linien (13) und/oder in Winkeln α zueinander verlaufende kettenförmige Abschnitte (14) sind, werden Fehlerbilder auf dem Kunststoffteil an der Übergangskontur zwischen den Schieberelementen und dem Werkzeugkorpus vom menschlichen Auge weniger wahrgenommen.

## Beschreibung

Die Erfindung betrifft ein Spritzgusswerkzeug zur Herstellung von Kunststoffteilen mit Schieberelementen zur Erzeugung von Hinterschnitten an den Kunststoffteilen, wobei die Schieberelemente an ihrem Randbereich eine Übergangskontur aufweisen, die an die Kontur des angrenzenden Werkzeugkorpus angepasst ist.

Zur Erfüllung der vom Kundendesign vorgegebenen Aufgabenstellungen ist das Einbringen von Hinterschnitten unumgänglich. Alle Funktionselemente, wie Versteifungen, Angusssysteme und Durchbrüche, die aus der Ebene der Bauteilfläche ragen und sich nicht in Entformungsrichtung verjüngen, bilden einen "Hinterschnitt", der beim Herausnehmen des Kunststoffteils aus dem Spritzgusswerkzeug durch einen Schieber oder Schieberelemente freigegeben werden muss.

Hierbei bilden die Schieberelemente ein Störfeld in der Kontur des Werkzeugs, die während des Spritzprozesses zu lokalen Änderungen im Druck und Temperaturfeld führen. Da Kunststoffschmelzen bezüglich ihrer Schwindung während der Abkühlphase starke Abhängigkeiten von Druck und Temperatur zeigen, kommt es im Randbereich der Schieberelemente zum Korpus oft zu so starken Schwankungen in der Schwindung der Kunststoffteile. Die hierdurch in der Oberfläche verursachten Deformationen führen zu einer sichtbaren Einfallstelle. Dieser Einfallstellenproblematik wird u. a. durch Anpassungen und Tuschierungen der Schieberelemente und der Temperierung des Werkzeuges begegnet.

Bei lackierten Kunststoffteilen kommt es durch die Hochglanzoberfläche mit Ihrer hohen Brillanz und dem klaren Spiegelbild der Umgebung auf dem Bauteil, zum Beispiel bei der im Automobilbereich üblichen Außenlackierung, schon bei bereits kleinsten Deformationen in der Oberfläche zu einer im Wahrnehmungsbereich des menschlichen Auges liegenden Verzerrung des Spiegelbildes. Hierbei liegen die Grenzen der Wahrnehmung des menschlichen Auges, bei schwarzen Hochglanzoberflächen, im Bereich von Deformationen von 1 - 2 µm Tiefe und entsprechenden Flankenwinkeln. Bei raueren Oberflächen sind stärkere Deformationen ohne sichtbare Oberflächendefekte möglich.

Das Einpassen der Schieber im Werkzeug ist mit einem hohen Aufwand verbunden. Erschwerend zu der hohen Zahl an Optimierungsschleifen zur Anpassung der Schieber und Minimierung der Fehlstellen, ist die Optimierung des Werkzeugs erst im Endstadium, bei voll einsatzfähigem Werkzeug möglich. Dies führt häufig zum Risiko eines Zeitverzugs für die Serienbelieferung.

Es stellt sich daher die Frage, durch welche Maßnahmen dem Fehlerbild noch begegnet werden könnte, um dem exponentiell anwachsenden Abstimmungsaufwand zu begegnen.

Der Erfindung liegt die Aufgabe zugrunde, ein Spritzgusswerkzeug nach dem Oberbegriff des Anspruchs 1 so zu verbessern, dass Fehlerbilder auf dem Kunststoffteil an der Übergangskontur zwischen den Schieberelementen und dem Werkzeugkorpus vom menschlichen Auge weniger wahrgenommen werden. Folglich folgt die Erfindung dem Ansatz, zur Kaschierung des Fehlerbildes der "Schiebermarkierungen" - nicht die Einfallstelle an sich wird vermindert, sondern lediglich die Auswirkung auf den Betrachter soll beeinflusst werden.

Erfindungsgemäß wird diese Aufgabe dadurch gelöst, dass die Übergangskontur gebogene Linien und/oder in Winkeln α zueinander verlaufende kettenförmige Abschnitte snd.

Bei der Vermessung der Kunststoffteile wurde festgestellt, dass die am Schieberübergang, d. h. am Randbereich der Schieberelemente zum Korpus entstandenen Deformationen von ihrer Größenordnung her im Wellenbereich der Longwaves (Wellenlängen) von 1 - 10 mm liegen. Deformationen der Schieberabzeichnungen liegen nach den Vermessungen bei hochglänzenden Oberfläche einer Wellenlänge von 5 - 7 mm und einer Tiefe > 1 - 3 µm. Bei lackierten Oberflächenstrukturen liegen in diesem Bereich die üblichen Gestaltabweichungen. Diese "üblichen" Gestaltabweichungen zeigen sich in leichten Deformationen auf der Oberfläche des zum Beispiel lackierten Kunststoffteils. Lackierte Oberflächen sind in der Regel mit leichten Deformationen übersät. Dieses Erscheinungsbild wird jedoch vom menschlichen Auge nicht als fehlerhaft empfunden.

Lackwerte der (guten) Oberflächen bewegen sich in den folgenden Bereichen:
Wellenlänge = 1 - 10 mm; Tiefe der Deformation (Amplitude) ≤ 5 µm
Wellenlänge = 0,3 - 1 mm; Tiefe der Deformation (Amplitude) ≤ 0,15 - 0,5 µm

In diesen Bereichen bewegen sich ebenfalls die Deformationen, die durch die Schieberelemente eingebracht werden. Die Abzeichnungen sind jedoch bei einer Qualitätsüberprüfung nach wie vor sichtbar. Offensichtlich ist also im Grenzbereich der Wahrnehmung, nicht das Ausmaß der Einfallstelle, sondern deren übergeordnete Form, hier eine gerade Linie, wichtig.

Die Erfindung hat daher zum Inhalt, den Übergang zwischen dem Schieber bzw. den Schieberelementen und Werkzeugkorpus derart zu gestalten, dass das durch Reflektion an der Oberfläche entstehende Intensitätsfeld im Bereich des Schieberübergangs mit dem der Umgebung angeglichen wird.

Gelöst wird diese Aufgabe also dadurch, dass die übliche gerade Kontur des Schieberüberganges zum Werkzeugkorpus durch eine gebogene Linie oder durch in Winkeln zueinander verlaufende Kettenabschnitte ersetzt wird. Das an der herkömmlichen Schieberkante entstehende konstante Intensitätsfeld wird durch den Einsatz z. B. einer definiert gewellten Schieberkante gebrochen und ein auf- und abschwellendes Intensitätsfeld entsteht. Das einheitliche Bild der Deformation wird dadurch unterbunden und der Fehler selbst geht in den Intensitätsschwankungen der Umgebung unter, egal, aus welchem Winkel das Bauteil betrachtet wird. Die Abschnitte des Schiebers, deren Flanken gleich ausgerichtet sind, sollten den Bereich des Short- (SW) und Longwave (LW) abdecken.

Die Lage der Schieberelemente ist abhängig von der Kontur des Bauteils und den dafür benötigten Hinterschnitten. Bauteilbedingt kann häufig nicht vermieden werden, dass Schieber in einem Bereich angeordnet sind, der einen sichtbaren Einfluss auf das Erscheinungsbild des Kunststoffteils hat.

In bevorzugter Ausgestaltung sind die gebogenen Linien wellenförmig ausgebildet. Bevorzugt weisen die Linien einen sinusförmigen Verlauf auf.

Vorteilhaft sind die Wellenlängen der Linien kleiner als 30 mm und die Amplituden kleiner als 15 µm.

In einer anderen erfinderischen Ausgestaltung sind die Wellenlängen der Linien kleiner als 10 mm und die Amplituden kleiner als 5 µm.

In einer anderen erfinderischen Ausgestaltung sind die Wellenlängen der Linien im Bereich von 1,0 mm - 0,3 mm und die Amplituden im Bereich von 0,5 µm - 0,15 µm liegen.

In einer alternativen erfinderischen Ausgestaltung besteht die Übergangskontur aus keinen gebogene Linien, sondern aus im Winkel zueinander verlaufenden kettenförmigen Abschnitten.

Vorteilhaft ist die Länge der kettenförmigen Abschnitte kleiner gleich 30 mm, bevorzugt kleiner gleich 20 mm und besonders bevorzugt kleiner gleich 10 mm.

In einer Ausgestaltung sind die kettenförmigen Abschnitte in einem Winkel kleiner als 180 Grad, bevorzugt kleiner als 90 Grad, besonders bevorzugt kleiner als 45 - 30 Grad zueinander angeordnet.

Selbstverständlich kann es auch vorteilhaft sein, die Übergangskontur sowohl durch gebogene Linien als auch durch in Winkeln zueinander verlaufende kettenförmige Abschnitte zu gestalten.

In einer erfindungsgemäßen Ausführungsform beträgt die Länge der Übergangskontur des Schieberelementes im Sichtbereich mindestens 10 mm, bevorzugt mindestens 30 mm oder 50 mm oder 150 mm.

Bevorzugt ist das Kunststoffteil ein Teil eines Kraftfahrzeuges und bevorzugt dort ein großflächiges Außenanbauteil und besonders bevorzugt dort ein großflächiges Außenanbauteil im Sichtbereich.

Bevorzugt ist das Kunststoffteil ein Bauteil im Class A/B/C Bereich eines Automobils. Unter Class A/B/C Bereich werden bestimmte Sichtflächenbereiche eines Bauteils verstanden. Diese können zwischen den einzelnen OEM's variieren. Alle lackierten Bereiche eines Bauteil werden einer dieser Kategorien zugeordnet, sie sind entweder A-/B- oder C-Bereiche.
In der Regel sind waagerechte, nach oben orientierte Flächen wie Dach-, Kofferraum- oder Motorraumflächen, ebenso alle senkrecht orientierten Flächen etwa oberhalb Hüfthöhe A-Flächen.
Alle senkrechten Flächen unterhalb der Hüfthöhe, werden i.d.R. als B-Fläche bezeichnet.
Alle nach unten, zur Straße hin gerichteten Flächen werden i.d.R. als C-Flächen bezeichnet.
Alle Zwischenbereiche, also Schräg nach oben (A oder B), sowie schräg nach unten (B oder C) werden individuell bei jedem Projekt und jedem Automobilhersteller einzeln bewertet und festgelegt.

Vorteilhaft ist das Kunststoffteil ein Stoßfänger, ein Schweller, eine Heckklappe oder ein Kotflügel.

Die Länge der Übergangskontur des Schieberelementes beträgt in einer erfinderischen Ausgestaltung mindestens 10 mm, bevorzugt mindestens 30 mm oder 50 mm oder 150 mm. Die Längenangabe bezieht sich auf die Länge des Sichtbereichs, den der Schieberübergang auf dem Kunststoffteil durchläuft.

Die Änderung des Schieberdesigns bringt folgende Vorteile mit sich:
□ Das Auge des Betrachtes wird getäuscht, Fehlstellen fallen nicht als solche ins Auge.
□ Der Druck und die Temperatureinflüsse werden durch Überlappung der Flächen in die Breite gezogen und somit ist insgesamt die lokale Differenz abgeflacht.
□ Die Stabilität der Schieber ist gegen eine Verkippung massiv erhöht!

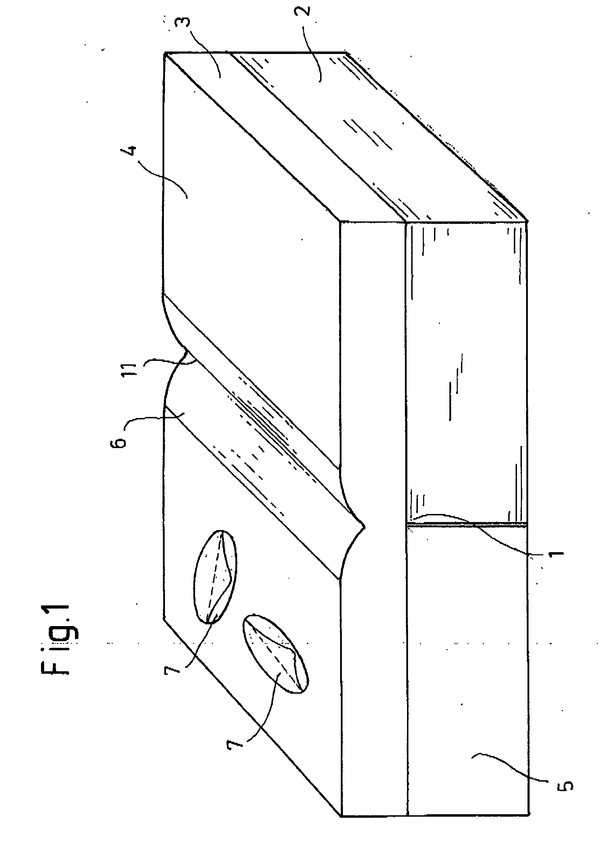

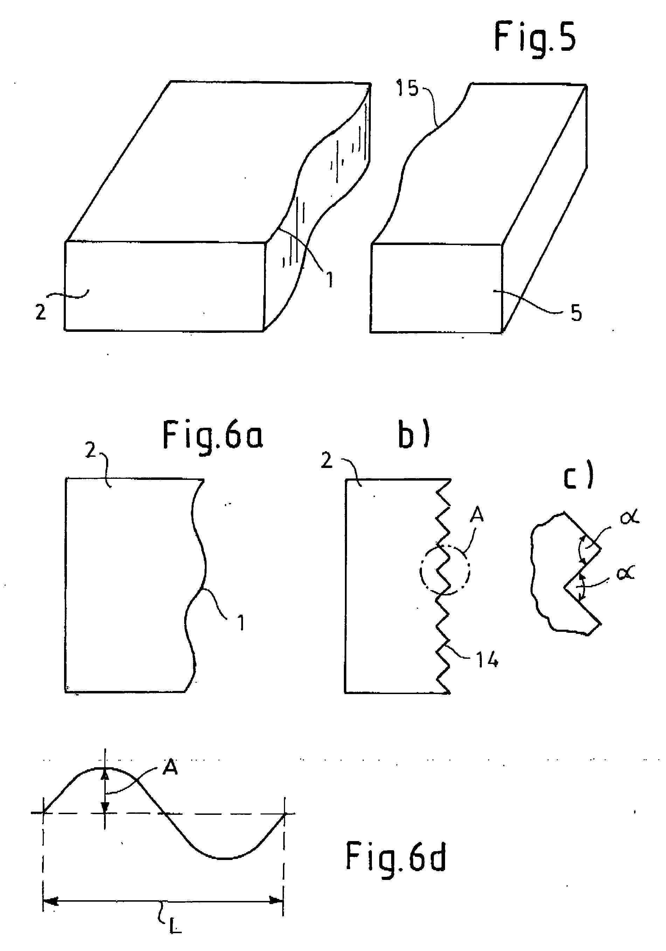

Figur 1 zeigt einen Ausschnitt aus einem Spritzgusswerkzeug nach dem Stand der Technik zur Herstellung von Kunststoffteilen 3 für Kraftfahrzeuge mit Schieberelementen 2 zur Erzeugung von Hinterschnitten an den Kunststoffteilen 3. Die Schieberelemente 2 weisen an ihrem Randbereich zum Werkzeugkorpus 5 eine gerade verlaufende Übergangskontur 1 auf. Die Kontur 15 (siehe Figuren 5 und 6) des Werkzeugkorpus 5 ist an die Übergangskontur 1 angepasst.

Wenn das Kunststoffteil 3 hergestellt wird, kommt es während des Spritzprozesses im Randbereich der Schieberelemente 2 zum Werkzeugkorpus 5, d. h. an der Übergangkontur 1, oft zu starken Schwankungen in der Schwindung der Kunststoffteile. Die hierdurch auf der den Schieberelementen 2 abgewandten Oberfläche 4 verursachten als gerade Linie 11 verlaufende Deformationen 6 führen zu einer sichtbaren Einfallstelle, die größer als die üblichen Deformationen 7 auf der Oberfläche, außerhalb der Übergangskontur 1, sind.

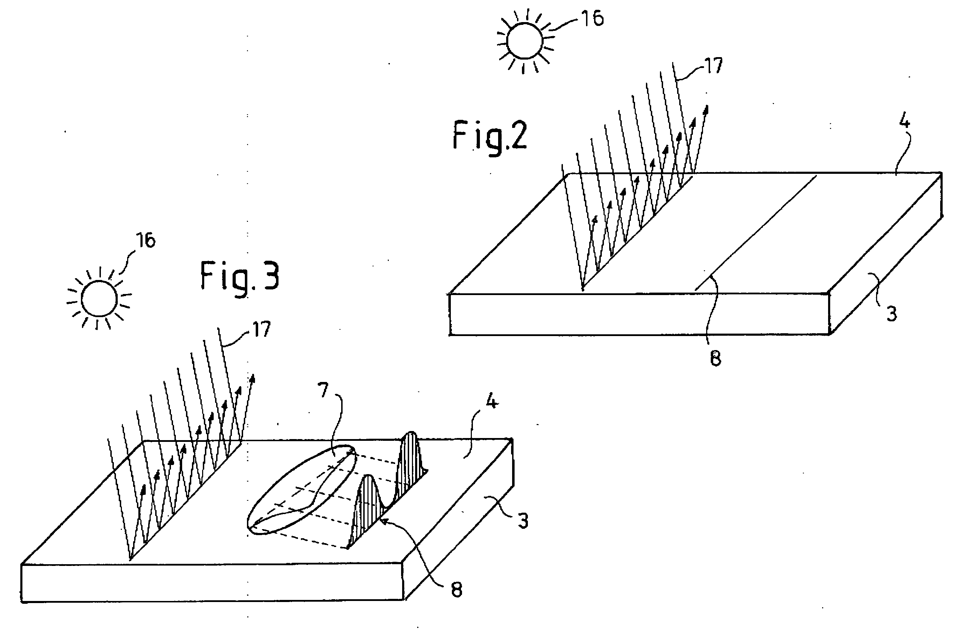

Figur 2 zeigt ein Intensitätsfeld auf der Oberfläche 4 eines Kunststoffteils 3, wenn keine Fehlstellen oder Einfallstellen vorhanden sind, d. h. die Intensität gleich Null ist. Die Lichtquelle 16 ist durch eine stilisierte Sonne dargestellt, die parallele Strahlen 17 aussendet. Mit dem Bezugszeichen 8 ist das Intensitätsfeld ihrer Reflexion auf der Oberfläche bezeichnet.

Figur 3 zeigt ein Intensitätsfeld 8 auf der Oberfläche 4 eines Kunststoffteils 3, welches bei üblichen Gestaltsabweichungen oder Einfallstellen auftritt. Das Intensitätsfeld 8 ist in einer Form und Größenordnung, die vom menschlichen Auge noch nicht als Störung wahrgenommen wird. Beziehungsweise gewollt erzeugt wird, um das Erscheinungsbild z.B. einer Lackoberfläche zu prägen.

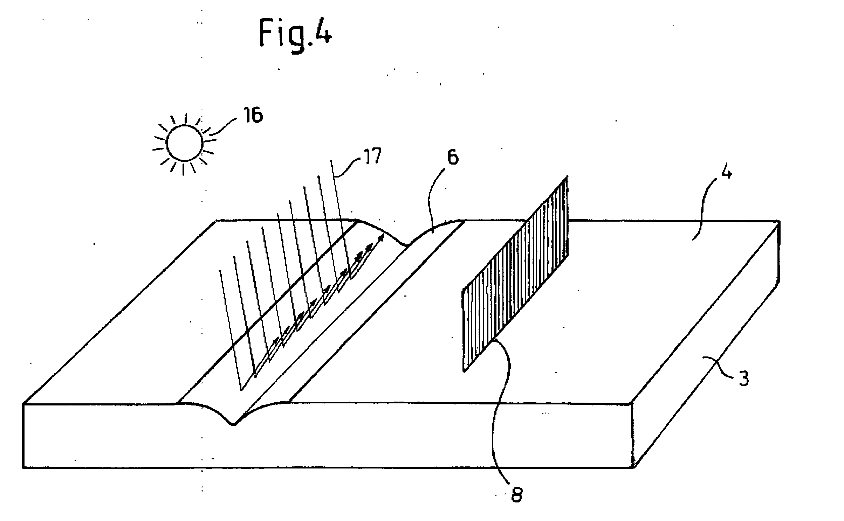

Figur 4 zeigt ein Intensitätsfeld 8, dass bei einer Anordnung nach dem Stand der Technik entsteht, wie es in Figur 1 dargestellt ist. Durch eine linienförmige Übergangskontur 1 (siehe Figur 1) entsteht eine linienförmige Deformation 6. Hierdurch entsteht ein konstantes Intensitätsfeld 8, welches vom menschlichen Auge als Störung wahrgenommen wird.

Figur 5 zeigt ein erfindungsgemäßes Schieberelement 2, welches an seinem zum Werkzeugkorpus 5 gewandten Randbereich eine Übergangskontur 1 aufweist. Der zum Schieberelement 2 gewandte Randbereich des Werkzeugkorpus 5 weist eine Kontur 15 auf, die an die Übergangskontur 1 möglichst konturenscharf angepasst ist. In der hier gezeigten Ausführungsform ist die Übergangskontur 1 wellenförmig ausgebildet.

Figur 6a zeigt eine Aufsicht auf ein Schieberelement 2 mit einer gebogenen Linie 1 als Übergangskontur. Figur 6b zeigt eine erfindungsgemäße Ausführungsform, bei der die Übergangskontur als in Winkeln α zueinander verlaufende kettenförmige Abschnitte 14 ausgebildet ist. Gezeigt ist hier eine sägezahnförmige Übergangskontur. Figur 6c zeigt den Ausschnitt A von Figur 6 b, vergrößert. Es ist der Winkel α zu erkennen. Der Sägezahnförmige Verlauf der Übergangskontur ist schematisch gezeigt, die Winkel α sind wesentlich steiler eingezeichnet. Figur 6c zeigt einen sinusförmigen Verlauf der Übergangskontur 1 mit einer Wellenlänge von L und einer Amplitude von A.

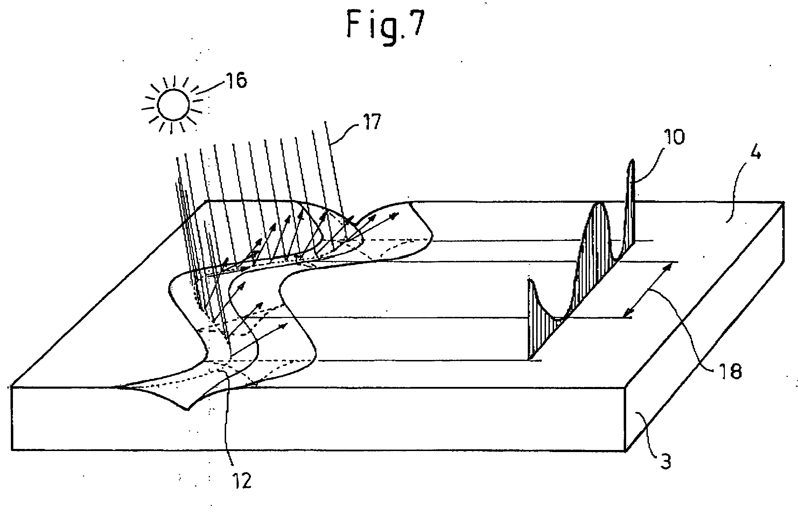

Figur 7 zeigt ein Intensitätsfeld 10, dass bei einer erfindungsgemäßen Anordnung nach der Figur 5 entsteht. Durch eine linienförmige Übergangskontur 1 (siehe Figur 5) entsteht eine linienförmige Deformation 12 im Bereich der Übergangskontur. Das hierdurch erzeugte Intensitätsfeld 10 ist wellenförmig und nicht konstant, wie nach dem Stand der Technik, und wird vom menschlichen Auge nicht als Störung wahrgenommen. Das Fehlerbild geht im Umgebungsfehler unter. Eine Wellenlänge zwischen 1 und 10 mm ist von Vorteil.

### Weitere Ausführungsformen sind denkbar:

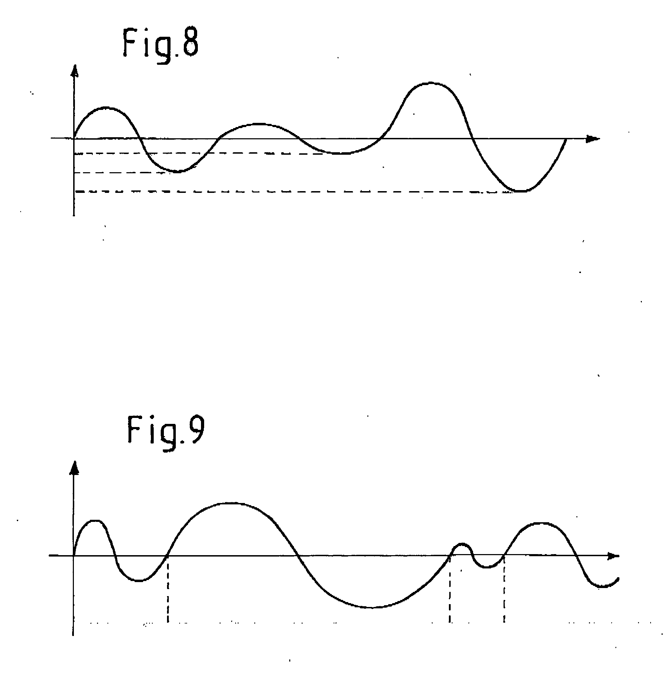

In Figur 8 wird eine Übergangskontur mit einer Wellenlänge mit unterschiedlichen Amplituden verwendet.

In Figur 9 wird eine Übergangskontur verwendet, deren Wellenabschnitte unterschiedliche Wellenlängen und unterschiedliche Amplituden aufweisen.

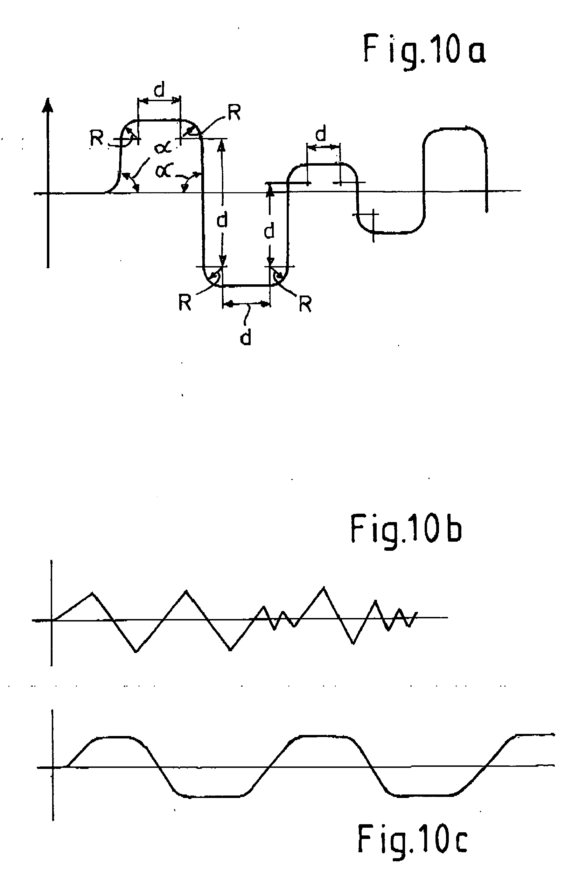

In den Figuren 10 a bis 10 c werden Übergangskonturen gezeigt, die aus einer Aneinanderreihung von geraden Segmenten d und Kurvenabschnitten R bestehen, die in einem Winkel α zueinander verkettet sind.

Bevorzugt sind R kleiner 30 mm, d kleiner 30 mm und 0° < α < 90°.

## Patentansprüche

1. Spritzgusswerkzeug zur Herstellung von Kunststoffteilen (3) mit Schieberelementen (2) zur Erzeugung von Hinterschnitten an den Kunststoffteilen (3), wobei die Schieberelemente (2) an ihrem Randbereich eine Übergangskontur (1) aufweisen, die an die Kontur (15) des angrenzenden Werkzeugkorpus (5) angepasst ist, **dadurch gekennzeichnet, dass** die Übergangskontur (1) gebogene Linien (13) und/oder in Winkeln α zueinander verlaufende kettenförmige Abschnitte (14) sind.

2. Spritzgusswerkzeug nach Anspruch 1, **dadurch gekennzeichnet, dass** die gebogenen Linien (13) wellenförmig ausgebildet sind.

3. Spritzgusswerkzeug nach Anspruch 2, **dadurch gekennzeichnet, dass** die Linien (13) einen sinusförmigen Verlauf aufweisen.

4. Spritzgusswerkzeug nach einem der Ansprüche 1 bis 3, **dadurch gekennzeichnet, dass** die Wellenlängen der Linien (13) kleiner als 30 mm und die Amplituden kleiner als 15 µm sind.

5. Spritzgusswerkzeug nach Anspruch 4, **dadurch gekennzeichnet, dass** die Wellenlängen der Linien (13) kleiner als 10 mm und die Amplituden kleiner als 5 µm sind.

6. Spritzgusswerkzeug nach Anspruch 4 oder 5, **dadurch gekennzeichnet, dass** die Wellenlängen der Linien (13) im Bereich von 1,0 mm - 0,3 mm und die Amplituden im Bereich von 0,5 µm - 0,15 µm liegen.

7. Spritzgusswerkzeug nach einem der Ansprüche 1 bis 6, **dadurch gekennzeichnet, dass** die Länge der kettenförmigen Abschnitte (14) kleiner gleich 30 mm, bevorzugt kleiner gleich 20 mm und besonders bevorzugt kleiner gleich 10 mm ist.

8. Spritzgusswerkzeug nach einem der Ansprüche 1 bis 7, **dadurch gekennzeichnet, dass** die kettenförmigen Abschnitte in einem Winkel kleiner als 180 Grad, bevorzugt kleiner als 90 Grad, besonders bevorzugt kleiner als 45 - 30 Grad zueinander angeordnet sind.

9. Spritzgusswerkzeug nach einem der Ansprüche 1 bis 8, **dadurch gekennzeichnet, dass** die Länge der Übergangskontur des Schieberelementes im Sichtbereich mindestens 10 mm, bevorzugt mindestens 30 mm oder 50 mm oder 150 mm beträgt.

10. Spritzgusswerkzeug nach einem der Ansprüche 1 bis 9, **dadurch gekennzeichnet, dass** das Kunststoffteil (3) ein Teil eines Kraftfahrzeuges und bevorzugt dort ein großflächiges Außenanbauteil und besonders bevorzugt dort ein großflächiges Außenanbauteil im Sichtbereich ist.

11. Spritzgusswerkzeug nach Anspruch 10, **dadurch gekennzeichnet, dass** das Kunststoffteil (3) ein Bauteil im Class A/B/C Bereich eines Automobils ist.

12. Spritzgusswerkzeug nach Anspruch 10 oder 11, **dadurch gekennzeichnet, dass** das Kunststoffteil (3) ein Kotflügel, ein Schweller, eine Heckklappe oder ein Stoßfänger ist.
